(19) **Europäisches Patentamt**

**European Patent Office**

**Office européen des brevets**

(11) **EP 0 686 515 B1**

(12) **EUROPÄISCHE PATENTSCHRIFT**

(45) Veröffentlichungstag und Bekanntmachung des Hinweises auf die Patenterteilung:
**11.11.1998 Patentblatt 1998/46**

(51) Int. Cl.$^6$: **B60C 11/03**, B60C 11/00, B60C 11/18, B60C 19/00 // B60C111:00

(21) Anmeldenummer: **95108068.8**

(22) Anmeldetag: **26.05.1995**

(54) **Fahrzeugluftreifen mit asymmetrischer Lauffläche**

Vehicle tyre with asymmetrical tread

Bandage pneumatique pour véhicule avec profil asymétrique

(84) Benannte Vertragsstaaten:
**DE ES FR GB IT LU**

(30) Priorität: **10.06.1994 DE 4420248**

(43) Veröffentlichungstag der Anmeldung:
**13.12.1995 Patentblatt 1995/50**

(73) Patentinhaber:
**Continental Aktiengesellschaft**
**30165 Hannover (DE)**

(72) Erfinder:
• **Meyer-Adlung, Jobst**
**D-30171 Hannover (DE)**

• **Spitz, Wolfgang**
**D-30455 Hannover (DE)**
• **Rohde, Dieter**
**D-31275 Lehrte (DE)**
• **Praetorius, Siegfried**
**D-30890 Barsinghausen (DE)**
• **Hartmann, Klaus-Heiner**
**D-31535 Neustadt (DE)**

(56) Entgegenhaltungen:
EP-A- 0 428 472       EP-A- 0 593 288
FR-A- 2 578 200       US-A- 3 286 756

• PATENT ABSTRACTS OF JAPAN vol. 015 no. 290 (M-1139) ,23.Juli 1991 & JP-A-03 104707 (YOKOHAMA RUBBER CO LTD:THE) 1.Mai 1991,

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf einen Fahrzeugluftreifen mit einer axial geteilten Lauffläche, die aus mindestens zwei hinsichtlich ihres Werkstoffes verschiedenen Streifen aufgebaut ist. Sie bezieht sich insbesondere auf solche Fahrzeugluftreifen, die an mehrachsigen, insbesondere dreiachsigen, Sattelaufliegern verwendet werden auf ungelenkten vorderen und/oder hinteren Achsen.

Aus der EP-PA 0 593 288 A1 ist ein Fahrzeugluftreifen bekannt, der in zwei nach axial innen hin durch je eine Umfangsnut begrenzte Schulterbereiche und einen dazwischen befindlichen Zentralbereich gegliedert sein soll. Innerhalb des Zentralbereiches soll dieser Reifen eine Oberfläche aufweisen, die aus aufeinanderfolgenden konvexen Kurven zusammengesetzt ist. Gemäß dem Unteranspruch 5 jener Anmeldung soll der Laufstreifen aus zwei verschiedenen Gummimischungen aufgebaut sein, wovon eine erste in einer radial inneren Region des Zentralbereiches angrenzend an die äußerste Gürtellage angeordnet sein soll und eine geringe Hysteresis mit einem tan Delta1 zwischen 0,01 und 0,35 aufweisen soll, während die zweite Gummimischung in einer radial äußeren, die Laufflächenperipherie bildenden Region zumindest eines der beiden Schulterbereiche angeordnet sein soll und eine größere Hysteresis mit einem tan Delta2 aufweisen soll, wobei tan Delta2 1,2-mal bis 10-mal so groß sein soll wie tan Delta1 .

Dem Fachmann ist - zum Beispiel aus der DE-OS 19 17 427 - geläufig, dass eine hohe Hysteresis in der Regel auf nasser Straße den Vorteil höherer Reibungsbeiwerte hat, aber auch den Rollwiderstand und die Reifenaufheizung erhöht und deshalb nur radial außen angewandt werden sollte, während radial weiter innen elastischere, also hystereseärmere, Mischungen zu bevorzugen sind. Eben dieses hat die EP-PA 0 593 288 A1 in den Unteransprüchen 10 und 11 zum Gegenstand.

Aus der Beschreibung, Seite 6, Zeilen 35 bis 39 der EP-PA 0 593 288 A1 ist außerdem bekannt, dass dann, wenn in nur einem der beiden Schulterstreifen eine vergleichsweise hysteresereiche Mischung verwendet wird, dieses in der fahrzeugäußeren Schulter der Fall sein sollte.

Aus US-PS A 3,286,756 ist ein Fahrzeugluftreifen bekannt, dessen eine, als "erste" bezeichnete Laufflächenschulter aus einem besonders griffigen Gummi und dessen andere, als "zweite" bezeichnete Laufflächenschulter aus einem besonders abriebbeständigen Gummi bestehen soll. Diese Schrift offenbart somit, dass das Entwicklungsziel eines hohen Widerstandes gegen (Nass-)Rutschen in Konkurrenz steht zu dem anderen Entwicklungsziel eines hohen Widerstandes gegen Abrieb. Gemäß Anspruch 2 soll die erste, besonders griffige und weniger abriebbeständige, Gummimischung auf der fahrzeugäußeren Reifenschulter angeordnet werden.

Mehrachsaggregate sowohl bei Anhängern als auch bei Sattelaufliegern sind meistens ungelenkt. Der Grund hierfür liegt weniger in den zusätzlichen Anschaffungskosten für eine Lenkung der vorderen und/oder hinteren Achsen sondern vor allem dem zusätzlichen Gewicht einer solchen Lenkkinematik, welches angesichts vom Gesetz- und Verordnungsgeber festgelegter höchstzulässiger Achslasten zwangsläufig die verbleibende Nutzlast verringert.

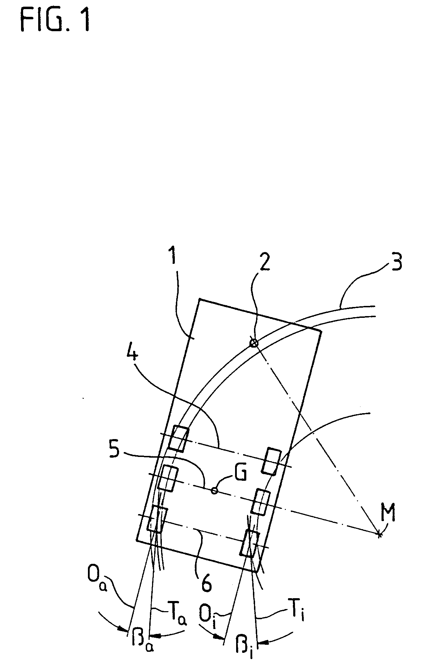

Dieses Problem wird anhand der Figur 1 erläutert. Sie zeigt schematisch einen dreiachsigen Sattelauflieger 1, dessen Kupplungspunkt 2 durch einen nicht dargestellten Sattelschlepper auf einer Kreisbahn 3 um einen Mittelpunkt M geführt wird. Bei quasistatischer Betrachtung sucht sich das die drei ungelenkten Achsen 4, 5 und 6 umfassende Achsaggregat eine - engere - Kreisbahn um den Punkt M, wobei eine Axiale durch den von der Achslastverteilung abhängigen Lastmittelpunkt G des Achsaggregates und durch den Kreisbahnmittelpunkt M geht.

Wenn der Lastmittelpunkt genau auf der inneren Achse 5 liegt, was regelmäßig bei voller Beladung des Aufliegers angestrebt wird, dann laufen die beiden Räder der inneren Achse 5 exakt tangential auf einer Kreisbahn um M; die Räder der vorderen Achse 4 und der hinteren Achse 6 hingegen können infolge der fehlenden Lenkung keine exakt tangentiale Bahn einnehmen, vielmehr ergibt sich ein Differenzwinkel $\beta_i$ zwischen der Tangente $T_i$ an die Kreisbahn des kurveninneren Rades und der Umfgangsrichtung $O_i$ dieses Rades, also ein Zwangsschlupf. Analoges gilt für das kurvenäußere Rad, wo die entsprechenden Größen mit dem Index a statt i bezeichnet sind.

Wird die gleiche Kupplungs-Kurvenbahn dynamisch betrachtet, so treten über der Geschwindigkeit quadratisch anwachsende Fliehkräfte hinzu. Diesen muß durch zum Kurvenmittelpunkt weisende (zentripetale) Querkräfte das Gleichgewicht gehalten werden. Damit das Hinterachsaggregat eine resultierende Querkraft aufnehmen kann, benötigt es entsprechend dem Schräglaufwinkel-Querkraftdiagramm der Reifen einen resultierenden Schräglaufwinkel, der sich den zuvor quasistatisch bestimmten Winkeln überlagert. Also nehmen tatsächlich die Räder der inneren Achse 5 einen Schräglaufwinkel gegenüber der Kurvenbahn an.

Diese zur Aufbringung einer Zentripetalkraft erforderlichen Schräglaufwinkel an der inneren Achse 5 sind so orientiert wie die zuvor quasistatisch bestimmten Schräglaufwinkel der Räder der hinteren Achse 6. Das Erfordernis, den Zentrifugalkräften das Gleichgewicht zu halten, führt also zu einer Vergrößerung der - zentripetal wirkenden - Schräglaufwinkel an der hinteren Achse 6, dem Aufbau eines kleineren, gleich orientierten Schräglaufwinkels an der inneren Achse 5 und einem Abbau der quasistatisch bestimmten - zentrifugal wirkenden - Schräglaufwinkel an der vorderen Achse 4 (und bei extremen Fliehkräften im Verhältnis zur Bahnkrümmung schließlich zur Orientierungsumkehr zu zentripetal hin).

Die dynamische Betrachtung macht klar, daß an ungelenkten Mehrachsaggregaten die höchste Querkraftbeanspruchung an der hinteren Achse auftritt; dementsprechend ist dort der Verschleiß am größten. An Dreiachsaggregaten sind in der Praxis Laufleistungen bauartgleicher Reifen auf der hinteren Achse von 80.000, auf der vorderen Achse von 120.000 und auf der inneren Achse von 300.000 km geläufig.

Aufgabe der Erfindung ist es, die Lebensdauer von gattungsgemäßen Fahrzeugluftreifen zu erhöhen, insbesondere von Reifen für Sattelauflieger oder Anhänger mit ungelenkten Mehrachsaggregaten, insbesondere auf der hinteren Achse.

Die Erfindung löst diese Aufgabe mit den Merkmalen des Anspruches 1. Ausgehend von der gattungsgemäßen axialen Teilung der Lauffläche ist diese Lösung dadurch gekennzeichnet, dass nur ein fahrzeugäußerer Streifen, der eine Breite zwischen 20 % und 25 % der gesamten Aufstandsflächenbreite aufweist, aus einem Material besteht, das gemäß DIN 53516 höchstens 70 % des Abriebvolumens zeigt wie das andere Material, aus dem der übrige Bereich der Lauffläche besteht.

Vorzugsweise wird für den fahrzeugäußeren Streifen ein Material verwendet, das gemäß DIN 53516 nur 50 % bis 60 % des Abriebvolumens des übrigen Laufflächenbereiches zeigt.

Dem Fachmann sind mehrere Maßnahmen zur Senkung des Abriebvolumens über der Zeit geläufig. Eine dieser Maßnahmen ist die Erhöhung der Härte. Sie ist durch eine erhöhte Vernetzungsstellendichte erreichbar, was mit einer erhöhten Schwefeldosierung zusammen mit entsprechenden Anpassungen in der Beschleunigerdosierung möglich ist. Hiermit ginge eine Senkung des Reibungsbeiwertes gegenüber Asphalt einher, die in engen Grenzen toleriert werden kann, insbesondere dann, wenn zur Erhaltung der Bremsleistung die Anzahl der Quereinschnitte in der Reifenlauffläche und/oder der Reibungsbeiwert in weniger abriebgefährdeten anderen Laufflächenzonen erhöht wird.

Eine kleine Reibwertabsenkung in axialer Richtung vergrößert überdies den abriebmindernden Effekt, weil dadurch in den besonders abriebgefährdeten Zonen die anfallende Reibleistung vermindert wird, freilich unter Inkaufnahme einer erhöhten Reibleistung in den übrigen Zonen, bzw. auf der inneren Achse.

Der Abriebwiderstand kann auch durch andere Füllstofftypen und/oder andere Füllstoffdosierung erhöht werden. Dem Fachmann ist bekannt, daß es dabei - auch wenn eine Erhöhung der Härte einhergeht - nicht zu einem Abfall des Reibungsbeiwertes kommen muß. Dem Fachmann ist ferner bekannt, daß, insoweit eine erhöhte Hysteresis verwendet wird, sich diese Erhöhung nur in dem für den Reibungsbeiwert entscheidenden hohen Frequenzbereich zeigen sollte, nicht aber in dem für den Rollwiderstand entscheidenden niedrigeren Frequenzbereich, um eine Erhöhung des Energieverbrauches sowie eine Erhöhung der Laufflächentemperatur und eine ansonsten einhergehende Minderung der Runderneuerungsfähigkeit zu vermeiden. Dem Fachmann ist insbesondere bekannt, daß das Frequenzband hoher Hysteresis nach oben verschoben wird bei Verkleinerung der Molekülgröße der Füllstoffe und/oder Polymere.

Weiterhin ist dem Fachmann bekannt, daß der Abriebwiderstand durch eine Erhöhung des Anteiles von Butadien (BR) und/oder Styrolbutadien (SBR) zulasten des Naturkautschukanteiles (NR) erhöht werden kann. Dabei können Differenzen im statischen E-Modul weitgehend vermieden werden.

Es hat sich als vorteilhaft erwiesen, wenn innerhalb des abriebfesteren Streifens keine Rillen von einer Breite über 1,5 mm angeordnet sind, also allenfalls erweichende Einschnitte. Auf diese Weise wird das in diesem gefährdeten Bereich stehende Positiv maximal, der Profiltiefenverlust über der Zeit minimal.

Um die Belastung an der Grenze zwischen den beiden Laufflächenstreifen erträglich zu halten, sollte der Unterschied im statischen Modul höchstens 4 Shore-Härtegrade betragen.

Aber auch bei Einhaltung großer Ähnlichkeit in der Steifigkeit der verschiedenen Materialien empfiehlt es sich, die Grenze zwischen den beiden verschieden abriebfesten Streifen in einen wenig belasteten Reifenbereich zu legen, insbesondere in den Mittenbereich der angrenzenden Längsrille, wobei dieser Mittenbereich als der symmetrisch um die Rillenmittellinie liegende Bereich mit einer Breite von 60 % der Rillenweite in halber Profiltiefe definiert sei.

Vorzugsweise verläuft die Trennlinie zwischen den beiden Streifen aus verschiedener Mischung radial. Weiterhin kann es sinnvoll sein, einen Farbunterschied zwischen beiden Mischungen zu erzeugen, beispielsweise die abriebfestere Mischung heller auszuführen. Die vorgeschlagene Ausrichtung der Trennlinie und/oder der Farbunterschied erleichtern die sortenreine Rückführung von unvulkanisierten Kautschukabfällen in den Laufstreifenmischer und -extruder. Überdies erleichtert speziell der vorgeschlagene Farbunterschied die Erkennbarkeit erfindungsgemäßer Reifen im Vertrieb und beim Endverbraucher.

Es hat sich als vorteilhaft erwiesen, die an den abriebfesteren Streifen angrenzende Längsrille besonders breit auszuführen. Hierdurch wird einerseits der zuvor definierte Mittenbereich besonders groß, was sowohl die Belastung in diesem Bereich senkt als auch das ausschöpfbare Toleranzfeld vergrößert, und andererseits eine größere Verformbarkeit in der Axialen und damit Freiheit in der wirksamen Lenkwinkeleinstellung des besonders abriebgefährdeten fahrzeugäußeren Bereiches gegenüber dem Rest der Lauffläche erreicht.

Gemäß Anspruch 4 sollte die Weite der an den abriebfesteren Streifen angrenzenden Längsrille mindestens so groß sein wie die Summe aus den Weiten der übrigen Längsrillen. Gemäß Anspruch 5 sollte die Weite der an den abriebfesteren Streifen angrenzenden Längsrille zwischen 12 % und 17 % der Aufstandsflächenbreite betragen.

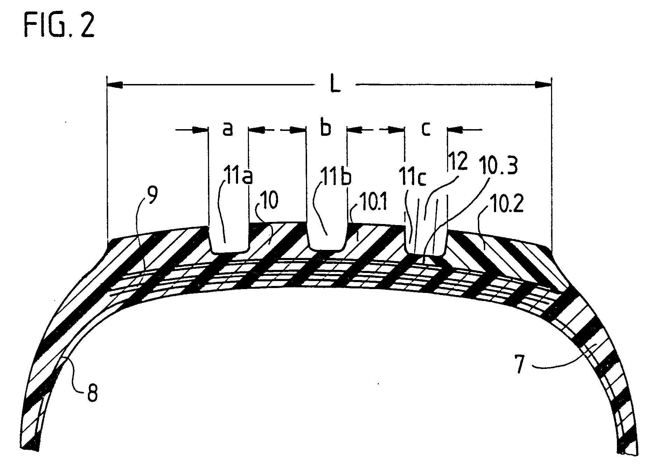

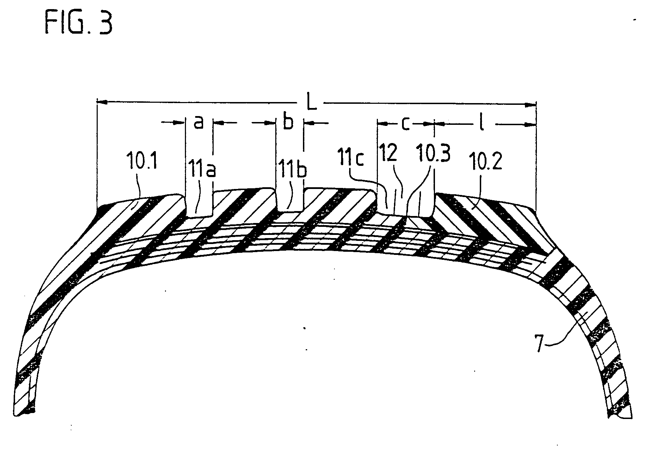

Die Erfindung wird nachfolgend anhand der Figuren 2 und 3 näher erläutert. Es zeigt:

Fig. 2    einen erfindungsgemäßen Fahrzeugreifen im Querschnitt, wobei die Asymmetrie der Laufflächengestaltung am unzerschnittenen Reifen nicht erkannt werden kann, und

Fig. 3    in analoger Darstellung einen solchen erfindungsgemäßen Fahrzeugreifen, der neben der erfindungsgemäßen, von außen nicht erkennbaren Asymmetrie in der Werkstoffwahl seiner Lauffläche auch eine Asymmetrie in der Profilierung aufweist.

Figur 2 zeigt einen erfindungsgemäßen Fahrzeugreifen 7 im Querschnitt. Oberhalb der Karkasse 8 befinden sich vier Gürtellagen 9 und darüber ein Laufstreifen 10, der in einen fahrzeuginneren Streifen 10.1 und einen fahrzeugäußeren Streifen 10.2 aufgeteilt ist. Der fahrzeugäußere Streifen 10.2 weist erfindungsgemäß höchstens 70 % des gemäß DIN 53516 zu messenden Abriebvolumens auf im Vergleich zum fahrzeuginneren Streifen 10.1. Selbstverständlich können beide Streifen 10.1 und 10.2 wie an sich bekannt auch in der Radialen unterteilt sein, wobei die innere Schicht dann als Base und die äußere als Cap bezeichnet wird. In solchem Falle ist das erfindungsgemäße Merkmal allein auf die beiden Caps zu beziehen.

Der hier gezeigte Reifen 7 ist für Sattelauflieger bestimmt, insbesondere für die vordere und hintere Achse. Er weist drei Längsrillen 11 auf, die zur näheren Differenzierung von der Fahrzeuginnenseite zur Fahrzeugaußenseite mit den Indices a, b und c genauer kennzeichenbar sind, die fahrzeugäußere Längsrille also mit 11c. Als Symbol für die jeweiligen Rillenweiten - zu messen in halber Profiltiefe des unbenutzten Reifens - ist der jeweilige Index selber genutzt. In diesem Ausführungsbeispiel stimmen die drei Rillenweiten a, b und c überein.

Innerhalb der fahrzeugäußeren Rille 11c ist der Mittenbereich 12 eingezeichnet, innerhalb dessen sich die Grenze 10.3 zwischen den beiden axial geschichteten Laufstreifen 10.1 und 10.2 befindet; in dieser Schnittebene - bei Zickzackförmigkeit der Rille 11c schwankt die Lage des Mittenbereiches 12 von Schnittebene zu Schnittebene - liegt die Grenze 10.3 genau in der Mitte des Grundes der Rille 11c. Die Grenze 10.3 zwischen den beiden Laufstreifen 10.1 und 10.2 verläuft in diesem Beispiel exakt radial.

Figur 3 zeigt eine bevorzugte Weiterbildung eines erfindungsgemäßen Reifens 7, wobei die gleiche Bezeichnungsweise wie zuvor erläutert verwendet ist. Auch hier stimmen die Weiten a und b der beiden Längsrillen 11a und 11b überein, sind jedoch gegenüber der Figur 2 verkleinert; dafür ist die Weite c der Längsrille 11c gegenüber der Figur 2 vergrößert; sie (c) ist etwas größer als die Weiten a und b zusammen. Dementsprechend ist auch der Mittenbereich 12 größer zur Plazierung der Grenze 10.3 zwischen den beiden Laufstreifen 10.1 und 10.2.

Erfindungsgemäße Luftreifen führen zu einer Reduzierung des Wartungsaufwandes an Sattelaufliegern mit ungelenkten Mehrachsaggregaten durch verlangsamten Reifenabrieb an den besonders abriebgefährdeten fahrzeugäußeren Reifenseiten insbesondere auf den mangels Lenkung nicht tangential lauffähigen Achsen. Dies sind insbesondere die vorderen und hinteren Achsen (sofern sie ungelenkt sind) von Mehrachsaggregaten, und dies umso stärker, desto größer der Achsabstand zwischen ungelenkter vorderster und hinterster Achse ist; dieser Abstand ist in der Regel bei Dreiachsaggregaten besonders groß. Das zu lösende Problem existiert aber auch bei ungelenkten Zweiachsaggregaten, wie sie sich häufig an Sattelaufliegern, konventionellen Anhängern und neuerdings an gelenklosen (rechtlich betrachtet häufig "einachsigen") Anhängern finden und wird auch in diesen Anwendungsfällen durch die erfindungsgemäßen Merkmale gelöst.

**Patentansprüche**

1.   Fahrzeugluftreifen (7) mit einer axial geteilten Lauffläche (10), die aus mindestens zwei hinsichtlich ihres Werkstoffes verschiedenen Streifen (10.1 und 10.2) aufgebaut ist,
**dadurch gekennzeichnet,** dass nur ein fahrzeugäußerer Streifen (10.2), der eine Breite (1) zwischen 20 % und 25 % der gesamten Aufstandsflächenbreite (L) aufweist, aus einem Material besteht, das gemäß DIN 53516 höchstens 70 % des Abriebvolumens zeigt wie das andere Material, aus dem der übrige Bereich (10.1) der Lauffläche besteht.

2.   Fahrzeugluftreifen (7) gemäß Anspruch 1 dadurch gekennzeichnet, daß innerhalb des abriebfesteren Streifens (10.2) keine Rillen von einer Breite über 1,5 mm angeordnet sind.

3.   Fahrzeugluftreifen (7) nach einem der vorangehenden Ansprüche dadurch gekennzeichnet, daß die Grenze (10.3) zwischen den beiden verschieden abriebfesten Streifen (10.1 und 10.2) sich im Mittenbereich (12) der angrenzenden Längsrille (11 bzw. 11c) befindet, wobei dieser Mittenbereich (12) als der symmetrisch um die Rillenmittellinie liegende Bereich mit einer Breite von 60 % der Rillenweite (c) in halber Profiltiefe definiert ist.

4.   Fahrzeugluftreifen (7) nach einem der vorangehenden Ansprüche dadurch gekennzeichnet, daß die Weite (c) der an den abriebfesteren Streifen (10.2) angrenzenden Längsrille (11c) mindestens so groß ist wie die Summe aus den Weiten (a, b) der übrigen Längsrillen (11a, 11b).

5. Fahrzeugluftreifen (7) nach einem der vorangehenden Ansprüche dadurch gekennzeichnet, daß Weite (c) der an den abriebfesteren Streifen (10.2) angrenzenden Längsrille (11c) zwischen 12 % und 17 % der Aufstandsflächenbreite beträgt.

**Claims**

1. Pneumatic vehicle tyre (7), having an axially divided tread surface (10) which is constructed from at least two strips (10.1 and 10.2) formed from different materials, characterised in that only one outer strip (10.2) of the vehicle tyre, which strip has a width (1) between 20 % and 25 % of the total supporting face width (L), is formed from a material which exhibits, according to DIN 53516, at most 70 % of the wear volume compared with the other material, from which the remaining region (10.1) of the tread surface is formed.

2. Pneumatic vehicle tyre (7) according to claim 1, characterised in that no grooves of a width greater than 1.5 mm are disposed internally of the more wear-resistant strip (10.2).

3. Pneumatic vehicle tyre (7) according to one of the preceding claims, characterised in that the boundary (10.3) between the two strips (10.1 and 10.2), which have different resistances to wear, is situated in the central region (12) of the abutting longitudinal groove (11 or 11c respectively), this central region (12) being defined as the region lying symmetrically around the centre line of the groove and having a width of 60 % of the groove width (c) in half the profile depth.

4. Pneumatic vehicle tyre (7) according to one of the preceding claims, characterised in that the width (c) of the longitudinal groove (11c), which abuts against the more wear-resistant strip (10.2), is at least as large as the sum of the widths (a, b) of the remaining longitudinal grooves (11a, 11b).

5. Pneumatic vehicle tyre (7) according to one of the preceding claims, characterised in that the width (c) of the longitudinal groove (11c), which abut against the more wear-resistant strip (10.2), amounts to between 12 % and 17 % of the supporting face width.

**Revendications**

1. Bandage pneumatique pour véhicule (7), avec une surface de roulement (10) divisée axialement, constituée d'au moins deux bandes (10.1 et 10.2), différentes concernant leur matériau caractérisé en ce que seule une bande (10.2), extérieure au véhicule, présentant une largeur (1) comprise entre 20 % et 25 % de la largeur globale (L) de la surface de contact, est constituée d'un matériau faisant, selon DIN 53516, au plus 70 % du volume d'abrasion de l'autre matériau dont est constituée la zone restante (10.1) de la surface de roulement.

2. Bandage pneumatique pour véhicule (7) selon la revendication 1, caractérisé en ce qu'aucune rainure d'une largeur dépassant 1,5 mm n'est disposée a l'intérieur du bandage (10.2) le plus résistant à l'abrasion.

3. Bandage pneumatique pour véhicule (7) selon l'une des revendications précédentes, caractérisé en ce que la limite (10.3) entre les deux bandages (10.1 et 10.2) présentant une résistance à l'abrasion différente se trouve dans la zone médiane (12) de la rainure longitudinale (11, respectivement 11c) limitrophe, cette zone médiane (12) étant définie comme étant la zone située symétriquement par rapport à l'axe de rainure, avec une largeur de 60 % de la largeur de rainure (c), à mi-profondeur du profil.

4. Bandage pneumatique pour véhicule (7) selon l'une des revendications précédentes, caractérisé en ce que la largeur (c) de la rainure longitudinale (11c) limitrophe à la bande (10.2) plus résistante à l'abrasion et d'au moins la valeur de la somme constituée des largeurs (a, b) des autres rainures longitudinales (11a, 11b).

5. Bandage pneumatique pour véhicule (7) selon l'une des revendications précédentes, caractérisé en ce que la largeur (c) de la rainure longitudinale (11c) limitrophe au bandage (10.2) plus résistant à l'abrasion est comprise entre 12 % et 17 % de la largeur de la surface d'appui.

FIG. 1

FIG. 2

FIG. 3